# EUROPEAN PATENT SPECIFICATION

(11) **EP 3 712 484 B1**
(45) Date of publication and mention of the grant of the patent: **10.08.2022**
(21) Application number: 20000137.8
(22) Date of filing: 12.03.2020
(51) Int. Cl.: F16L 55/11, B29C 70/00, F16L 55/115, F16L 57/00

(54) **PIPE CAP**
ROHRKAPPE
CAPUCHON DE TUYAU

(30) Priority: 20.03.2019 IT 201900004035
(43) Date of publication of application: 23.09.2020
(73) Proprietor: Polykap S.R.L., 47891 Falciano (SM)
(72) Inventor: Luppi, Davide, 47893 Borgo Maggiore (SM)
(74) Representative: Zanotti, Laura

(56) References cited:
- WO-A1-2008/044363
- CA-A1- 2 860 399
- CN-U- 208 150 029
- GB-A- 2 145 070
- IT-A1- UB20 155 084
- US-A- 5 224 515

## Description

This invention relates to a pipe cap, in particular for rubber pipe, of the type usable both for fitting to the outside and for fitting to the inside of the pipe.

A pipe cap according to the preamble of claim 1 is disclosed in the document CA 2 860 399 A.

A cap of this type is cup-shaped meaning that it can be inserted into the pipe, or placed on the end of the pipe, acting as a cover.

During fitting to the pipe, in particular fitting to the outside of the pipe, it is important to prevent the pipe from slipping away from the cap - cover.

One prior art solution consists of making on the inner wall of the cap a circular projection which locks the pipe, preventing the latter from slipping away during use.

However, this projection is not sufficient to guarantee locking of the pipe in the cap. Moreover, inserting the pipe into the cap or placing it on the cap is difficult, in particular if the pipe has a special geometry.

The aim of this invention is to provide a cap which can guarantee locking of the pipe.

A further aim of this invention is to provide a cap which can be used for pipes having different geometry, for example pipes with facets.

Those aims are achieved by a cap having the features defined in claim 1.

The advantages of the invention are more apparent in the detailed description which follows, with reference to the accompanying drawings which illustrate an example, non-limiting embodiment of the invention, in which:
- Figure 1 is a perspective view of a preferred embodiment of a cap according to this invention;
- Figure 2 is a top view of the cap of Figure 1;
- Figure 3 is a front view of the cap of Figure 1;
- Figure 4 is a side view of the cap of Figure 1;
- Figure 5 is a cross-section of the detail A from Figure 4.

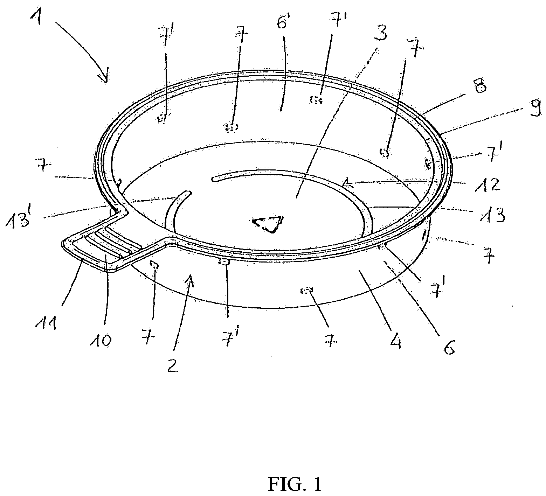

With reference to the figures of the accompanying drawings, in Figure 1 the numeral 1 represents a preferred embodiment of a pipe cap according to this invention.

The cap 1 is of the type usable for fitting to the outside or inside of a pipe, not illustrated, in particular a rubber pipe.

In the embodiment in Figure 1 the cap 1 has a substantially cup-shaped body 2 comprising a base 3, a lateral wall 4 and an open end 5. The base 3 is substantially circular. The lateral wall 4 has an outer surface 6 and an inner surface 6'. The cap 1 allows both fitting in which the pipe is inserted into the cup 2 and fitting in which the pipe is positioned on the outer surface 6 of the lateral wall 4 of the cup. Preferably the inner surface 6' extends from the perimeter or circumference of the base 3 towards the end 5 of the cup 2 in such a way as to create a cavity suitable for insertion and securing of a pipe. When fitting the pipe inside the cup 2 the inner surface 6' of the lateral wall 4 surrounds the pipe.

According to the invention, the outer surface 6 and/or the inner surface 6' of the lateral wall 3 of the cup has a plurality of projections 7, 7' which are arranged at different heights.

As illustrated in Figures 1, 3 and 4, the projections 7, 7' are arranged on the outer surface 6 and/or on the inner surface 6' of the lateral wall 4 so that they are spaced from the base 3.

In this way the pipe is firmly secured inside the cup 2 (in the embodiment illustrated in the figures, in which the projections 7, 7' are made on the inner lateral surface of the cup) or on the outer surface 6 of the lateral wall 4 of the cup 2.

Making a plurality of projections 7, 7' at different heights facilitates insertion of the pipe, at the same time improving locking of the pipe on the cap 1 or in the cap 1.

Arranged at the same height as each other there is a plurality of projections 7 which are spaced from each other along the circumference of the outer surface 6 and/or of the inner surface 6' of the lateral wall 3 of the cup. In particular, the distance between two successive projections 7 which are arranged at the same height is greater than the size of the projection 7 itself along the circumference, preferably greater than double the size of the projection 7.

According to the invention and illustrated in the figures, the projections 7 arranged spaced from each other at a first height are offset relative to projections 7' arranged spaced from each other at a second height. This configuration allows easy securing of pipes having geometry cross-sections which are not circular, for example pipes with facets.

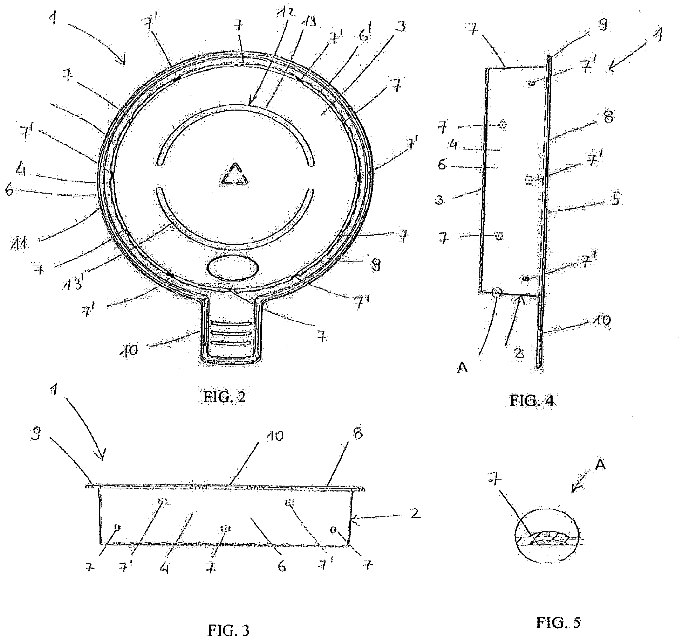

Preferably, the projections 7, 7' are made in one piece with the surface of the cup. In particular, the projections 7, 7' are made by thermoforming. Advantageously, the projections have a substantially curved profile. Figure 5 illustrates the cross-section of a projection 7 obtained by thermoforming in a preferred embodiment, in which the profile of the projection 7 is curved.

In an alternative embodiment, not illustrated, the cap 1 comprises at least one projection which extends along the circumference of the outer surface 6 and/or of the inner surface 6' of the lateral wall 3 of the cup 2 substantially continuously.

In the embodiment illustrated, positioned on the edge 8 of the cup at the open end 5 there is a flange 9. During pipe fitting to the outside of the cap, the pipe is positioned on the outer surface 6 of the lateral wall 3 of the cup 2 until it makes contact against the flange 9.

Advantageously, the flange 9 has an extension 10 substantially perpendicular to the lateral wall 3 of the cup 2, in such a way as to constitute a grip element.

In the preferred embodiment illustrated in the figures, the cap 1 comprises a ridge 11 which extends along the edge of the extension 10 and of the flange 9. The ridge 11 allows improved centring for moulding during production of the cap. Moreover, it provides greater grip and planarity.

Advantageously, the base 3 of the cup 2 is equipped with at least one stiffening element 12. In the embodiment illustrated in the figures, the stiffening element 12 is substantially ring-shaped. The stiffening element 12, preferably made by thermoforming, prevents deformation of the base 3. In particular, the stiffening element 12 comprises two half-rings 13, 13' which are arranged inside the cup 2. Preferably the cup 2 has a substantially frustoconical shape, wherein the base 3 of the cup 2 has a smaller diameter than the open end 5 of the cup 2. The cup 2 has a frustoconical shape externally and/or internally. In the external frustoconical shape, the outer surface 6 of the lateral wall 4 has an inclination in such a way as to connect the circumference of the base 3 with the edge 8 of the open end 5 of the cup 2. This facilitates fitting of the pipe to the outer surface 6 of the cap 1. In the internal frustoconical shape, the inner surface 6' of the lateral wall 4 has an inclination in such a way as to connect the circumference of the base 3 with the edge 8 of the open end 5 of the cup 2. During use as a cover, the substantially frustoconical shape allows easy insertion of the pipe until it locks, protecting its hole or the end.

Advantageously the cap is made of PET. Compared with the polyethylene normally used, the use of PET allows a reduction in the weight of the cap by up to 70%, with consequent simplification of transportation and reduction of the quantity of plastic to be recycled.

## Claims

1. A pipe cap, in particular for rubber pipe, comprising a substantially cup-shaped body (2) which has at least a base (3), a lateral wall (4) and an open end (5), the pipe cap allowing fitting in which the pipe is inserted inside the cup-shaped body (2) and allowing fitting in which the pipe is positioned on an outer surface of the lateral wall, said body (2) being suitable for being positioned inside and/or outside a pipe, the cap comprising a plurality of projections (7, 7') which are arranged at different heights on the outer surface (6) and/or inner surface (6') of the lateral wall (4) of the cup, wherein the cap comprises a plurality of projections (7, 7') which are arranged at the same height as each other and are spaced from each other along the circumference of the outer surface and/or of the inner surface of the wall of the cup; **characterised in that** the projections arranged spaced from each other at a first height are offset relative to projections arranged spaced from each other at a second height.

2. The pipe cap according to claim 1, **characterised in that** it comprises at least one projection (7) which extends along the circumference of the outer surface (6) and/or of the inner surface (6') of the lateral wall (4) of the cup (2) substantially continuously.

3. The pipe cap according to any of the preceding claims, **characterised in that** the cup (2) has a substantially frustoconical shape, wherein the base (3) of the cup (2) has a smaller diameter than the open end (5) of the cup (2).

4. The pipe cap according to any of the preceding claims, **characterised in that** it comprises a flange (9) positioned at the open end (5) of the cup (2).

5. The pipe cap according to claim 4, **characterised in that** the flange (9) has an extension (10) substantially perpendicular to the lateral wall (4) of the cup (2).

6. The pipe cap according to claim 5, **characterised in that** it comprises a ridge (11) which extends along the edge of the extension (10) and of the flange (9).

7. The pipe cap according to any of the preceding claims, **characterised in that** the base (3) of the cup (2) is equipped with at least one stiffening element (12) which is substantially ring-shaped.

8. The pipe cap according to claim 7, **characterised in that** said stiffening element (12) comprises two half-rings (13, 13') which are arranged inside the cup (2).

## Patentansprüche

1. Eine Leitungskappe, im Besonderen für einen Gummischlauch, einen im Wesentlichen tassenförmigen Körper (2) beinhaltend, der mindestens einen Boden (3), eine Seitenwand (4) und ein offenes Ende (5) hat, die Leitungskappe erlaubt dabei eine Anbringung, bei der die Leitung in den tassenförmigen Körper (2) eingeführt wird, und erlaubt dabei eine Anbringung, bei der die Leitung an einer Außenfläche der Seitenwand platziert wird, besagter Körper (2) eignet sich dabei dazu, in und/oder außerhalb einer Leitung platziert zu werden, die Kappe beinhaltet dabei eine Mehrzahl von Vorsprüngen (7, 7'), die in unterschiedlichen Höhen an der Außenfläche (6) und/oder Innenfläche (6') der Seitenwand (4) der Tasse angeordnet sind, wobei die Kappe eine Mehrzahl von Vorsprüngen (7, 7') beinhaltet, die in derselben Höhe wie die jeweils anderen angeordnet sind und sich um den Umfang der Außenfläche und/oder der Innenfläche der Wand der Tasse in einem Abstand voneinander befinden; **gekennzeichnet dadurch, dass** die Vorsprünge, die in einem Abstand voneinander auf einer ersten Höhe angeordnet sind, versetzt zu Vorsprüngen sind, die in einem Abstand voneinander auf einer zweiten Höhe angeordnet sind.

2. Die Leitungskappe nach dem Patentanspruch 1, **gekennzeichnet dadurch, dass** sie mindestens einen Vorsprung (7) beinhaltet, der sich im Wesentlichen ununterbrochen um den Umfang der Außenfläche (6) und/oder der Innenfläche (6') der Seitenwand (4) der Tasse (2) erstreckt.

3. Die Leitungskappe nach jedem der vorigen Patentansprüche, **gekennzeichnet dadurch, dass** die Tasse (2) eine im Wesentlichen kegelstumpfe Form hat, wobei der Boden (3) der Tasse (2) einen schmaleren Durchmesser als das offene Ende (5) der Tasse (2) hat.

4. Die Leitungskappe nach jedem der vorigen Patentansprüche, **gekennzeichnet dadurch, dass** sie einen Flansch (9) beinhaltet, der am offenen Ende (5) der Tasse (2) positioniert ist.

5. Die Leitungskappe nach dem Patentanspruch 4, **gekennzeichnet dadurch, dass** der Flansch (9) eine Erstreckung hat, die im Wesentlichen lotrecht zur Seitenwand (4) der Tasse (2) ist.

6. Die Leitungskappe nach dem Patentanspruch 5, **gekennzeichnet dadurch, dass** sie eine Rille (11) beinhaltet, die sich am Rand der Verlängerung (10) und des Flansches (9) erstreckt.

7. Die Leitungskappe nach jedem der vorigen Patentansprüche, **gekennzeichnet dadurch, dass** der Boden (3) der Tasse (2) mit mindestens einem Versteifungselement (12) ausgestattet ist, das im Wesentlichen ringförmig ist.

8. Die Leitungskappe nach dem Patentanspruch 7, **gekennzeichnet dadurch, dass** besagtes Versteifungselement (12) zwei Halbringe (13, 13') beinhaltet, die in der Tasse (2) angeordnet sind.

## Revendications

1. Un capuchon de tuyau, en particulier pour tuyau en caoutchouc, comprenant un corps essentiellement en forme de godet (2) qui a au moins une base (3), une paroi latérale (4) et une extrémité ouverte (5), le capuchon de tuyau permettant un montage dans lequel le tuyau est inséré à l'intérieur du corps en forme de godet (2) et permettant un montage dans lequel le tuyau est positionné sur une surface extérieure de la paroi latérale, ledit corps (2) étant destiné à être positionné à l'intérieur et/ou à l'extérieur d'un tuyau, le capuchon comprenant une pluralité de saillies (7, 7') qui sont disposées à des hauteurs différentes sur la surface extérieure (6) et/ou surface intérieure (6') de la paroi latérale (4) du godet, où le capuchon comprend une pluralité de saillies (7, 7') qui sont disposées à la même hauteur et sont distancées les unes des autres le long de la circonférence de la surface extérieure et/ou de la surface intérieure de la paroi du godet ; **caractérisé en ce que** les saillies disposées distancées les unes des autres à une première hauteur sont décalées par rapport aux saillies disposées espacées les unes des autres à une deuxième hauteur.

2. Le capuchon de tuyau selon la revendication 1, **caractérisé en ce qu'**il comprend au moins une saillie (7) qui s'étend le long de la circonférence de la surface extérieure (6) et/ou de la surface intérieure (6') de la paroi latérale (4) du godet (2) de façon essentiellement continue.

3. Le capuchon de tuyau selon l'une quelconque des revendications précédentes, **caractérisé en ce que** le godet (2) a une forme essentiellement tronco-conique, où la base (3) du godet (2) a un plus petit diamètre que l'extrémité ouverte (5) du godet (2).

4. Le capuchon de tuyau selon l'une quelconque des revendications précédentes, **caractérisé en ce qu'**il comprend une bride (9) positionnée au niveau de l'extrémité ouverte (5) du godet (2).

5. Le capuchon de tuyau selon la revendication 4, **caractérisé en ce que** la bride (9) a une extension (10) essentiellement perpendiculaire à la paroi latérale (4) du godet (2).

6. Le capuchon de tuyau selon la revendication 5, **caractérisé en ce qu'**il comprend un relief (11) qui s'étend le long du bord d'extension (10) et de la bride (9).

7. Le capuchon de tuyau selon l'une quelconque des revendications précédentes, **caractérisé en ce que** la base (3) du godet (2) est munie d'au moins un élément de renforcement (12) qui est essentiellement en forme d'anneau.

8. Le capuchon de tuyau selon la revendication 7, **caractérisé en ce que** ledit élément de renforcement (12) comprend deux demi-anneaux (13, 13') qui sont disposés à l'intérieur du godet (2).
